(19) Europäisches Patentamt
European Patent Office
Office européen des brevets

(11) EP 2 752 693 B1

(12) **EUROPEAN PATENT SPECIFICATION**

(45) Date of publication and mention of the grant of the patent:
**15.05.2019 Bulletin 2019/20**

(21) Application number: **12830627.1**

(22) Date of filing: **05.09.2012**

(51) Int Cl.:
***G02B 5/30*** *(2006.01)* ***B32B 27/30*** *(2006.01)*
***C09B 33/18*** *(2006.01)* ***G02F 1/1335*** *(2006.01)*

(86) International application number:
**PCT/JP2012/072643**

(87) International publication number:
**WO 2013/035753 (14.03.2013 Gazette 2013/11)**

(54) **POLARIZING ELEMENT AND POLARIZING PLATE**

POLARISIERENDES ELEMENT UND POLARISATIONSPLATTE

ÉLÉMENT DE POLARISATION ET PLAQUE DE POLARISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.09.2011 JP 2011197601**

(43) Date of publication of application:
**09.07.2014 Bulletin 2014/28**

(73) Proprietors:
- **Nippon Kayaku Kabushiki Kaisha**
  **Tokyo 102-8172 (JP)**
- **Polatechno Co., Ltd.**
  **Joetsu-shi, Niigata 944-0101 (JP)**

(72) Inventor: **MOCHIZUKI Noriaki**
**Tokyo 115-8588 (JP)**

(74) Representative: **Gille Hrabal**
**Brucknerstrasse 20**
**40593 Düsseldorf (DE)**

(56) References cited:
**EP-A1- 2 022 828** **WO-A1-2007/138980**
**WO-A1-2010/071094** **WO-A1-2010/071094**

- **S. WAHEED ET AL.: 'Stilbene Based Direct Dyes-effect of Fixing Agents on the Fastness and Colour Properties' JOURNAL OF THE CHEMICAL SOCIETY OF PAKISTAN vol. 24, no. 1, 2002, pages 10 - 17, XP055143885**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 752 693 B1

**Description**

TECHNICAL FIELD

The present invention relates to a dye-based polarizing element and a polarizing plate.

BACKGROUND ART

A polarizing element is typically manufactured by adsorbing and orienting iodine or a dichromatic dye which is a dichromatic pigment on a polyvinyl alcohol-based resin film. A protective film of triacetyl cellulose or the like is bonded to at least one side of the polarizing element via an adhesive to form a polarizing plate, which is used in an LCD device or the like. A polarizing plate using iodine as a dichromatic pigment is referred to as an iodine-based polarizing plate, and a polarizing plate using a dichromatic dye as a dichromatic pigment is referred to as a dye-based polarizing plate. Of these, dye-based polarizing plates are characterized in having high heat resistance, high humidity durability, and high stability, as well as high color selectivity according to the formulation thereof, but are problematic in that they exhibit lower levels of transmission, i.e., lower contrast, compared to iodine-based polarizing plates having the same level of polarization. Thus, there is a demand for a polarizing plate that maintains high durability, exhibits diverse color selectivity, and has high transmission and high polarization properties.

Patent Reference 1: Japanese Patent Laying-open 2005-171231
Patent Reference 2: Japanese Patent Laying-open 2007-238888
Patent Reference 3: Japanese Patent Laying-open 2008-120868
Patent Reference 4: Japanese Patent Laying-open 2009-014873
Patent Reference 5: Japanese Patent Laying-open H01-105204
Patent Reference 6: Japanese Patent Laying-open H03-175404

EP 2022828 A1 discloses a polarizing element comprising a polyvinyl alcohol resin film and a compound represented by formula (1)

[Formula 1]

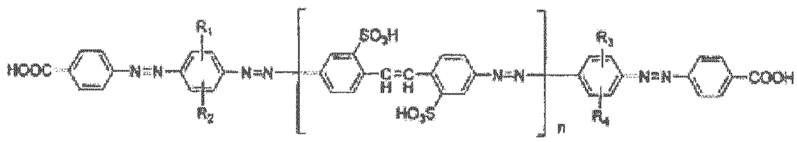

,

wherein n is 1 or 2 and $R_1$, $R_2$, $R_3$ and $R_4$ are hydrogen atoms, and the film is uniaxially stretched 5 times. The polarization rate of such polarizing element is very high (above 99%).

WO 2010/071094 A1 discloses a polyvinyl alcohol film with a polymerization degree of 5100 to 10000 for a polarizing film obtained by stretching the dyed film. The polarization degree of the obtained film is improved compared to a similar film with a polyvinyl alcohol with a lower polymerization degree.

SUMMARY OF THE INVENTION

PROBLEMS TO BE SOLVED BY THE INVENTION

In association with improving the optical properties of dye-based polarizing plates, techniques for improving optical properties via the structure of the dichromatic pigment have been disclosed in, for example, Patent References 1-3. Patent Reference 4 discloses a technique of improving optical properties via polarizing element machining conditions, and Patent References 5 and 6 disclose techniques of improving optical properties by using a highly polymerized polyvinyl alcohol-based film or improving substituents of film. However, the techniques disclosed in the abovementioned references are difficult to industrialize, and there remains a high demand for a polarizing plate having even higher transmission and high contract, as well as for further improvement in optical properties. The industrial manufacture of polarizing films from highly polymerized PVA requires the optimization of the physical properties of the PVA film, the polarizing film manufacturing conditions, and the dichromatic pigment used in the polarizing element.

As the result of dedicated research into solving the problems described above, the inventors discovered that a polarizing element comprising an azo compound-based dichromatic pigment and a polyvinyl alcohol-based resin having

a specific degree of polymerization improves optical properties, and improves durability against light, heat, and humidity.

Specifically, the present invention relates to:

(1) a polarizing element comprising a film containing a compound represented by the following formula (1) or a salt thereof and a polyvinyl alcohol-based resin having a degree of polymerization of 5,000 to 10,000, which is obtained by using a feedstock film having a swelling level of 200 to 240 %:

[Formula 1]

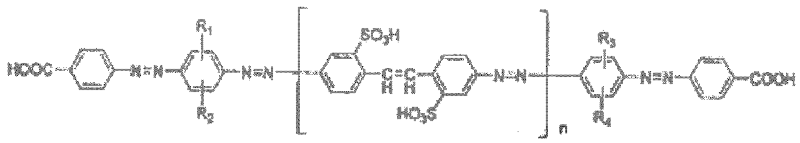

(wherein $R_1$ to $R_4$ each individually represent a hydrogen atom, a lower alkyl group, or a lower alkoxyl group; and n represents 1-3);

(2) the polarizing element according to (1), wherein $R_1$ to $R_4$ are hydrogen atoms;

(3) a polarizing plate characterized in that a transparent protective layer is provided on at least one side of the polarizing element according to (1) to (43);

(4) an LCD device comprising the polarizing element according to (1) or(2); and

(5) a liquid crystal projector comprising the polarizing element according to (1) or (2).

ADVANTAGES OF THE INVENTION

The polarizing element or polarizing plate of the present invention provides improved optical properties, and improved durability against light, heat, and humidity.

BEST MODE FOR CARRYING OUT THE INVENTION

The polarizing element according to the present invention is constituted by a film comprising a polyvinyl alcohol-based resin and a compound represented by formula (1) or a salt thereof, wherein the resin has a degree of polymerization from 5,000 to 10,000:

[Formula 1]

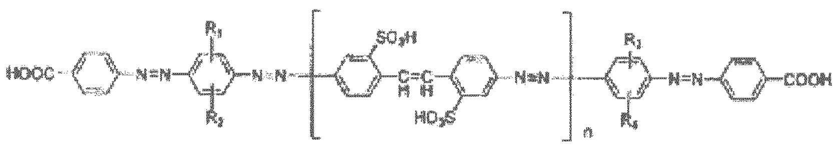

(wherein $R_1$ to $R_4$ each individually represent a hydrogen atom, a lower alkyl group, or a lower alkoxyl group; and n represents 1-3).

If the present invention comprises a dichromatic dye, a film comprising a polyvinyl alcohol-based resin is most preferable out of considerations of dye affinity and cross-linkability. An exemplary method of manufacturing the polarizing element according to the present invention will be described hereafter.

There is no particular restriction upon the method to produce the polyvinyl alcohol-based resin which constitutes the polarizing element according to the present invention; a known method can be used to produce the resin. For example, the polyvinyl alcohol-based resin used in the present invention can be produced by saponifying a polyvinyl ester polymer obtained by polymerizing a vinyl ester. Examples of vinyl esters include vinyl acetate, vinyl formate, vinyl propionate, vinyl butyrate, vinyl pivalate, vinyl versate, vinyl laurate, vinyl stearate, and vinyl benzoate, one or more of which can be selected. Of these, vinyl acetate is preferable. There is no particular restriction upon the polymerization temperature, but, if methanol is used as a polymerization solvent, a temperature around 60°C is preferable, as the boiling point of methanol is near 60°C. The polyvinyl alcohol resin is not limited to a saponified homopolymer of a vinyl ester as long as the effects of the present invention are not negatively affected. Acceptable examples include: a modified PVA vinyl ester in which an unsaturated carboxylic acid or a derivative thereof, an unsaturated sulfonic acid or a derivative thereof, a $C_{2-30}$ alpha-olefin, or the like is graft copolymerized with a polyvinyl alcohol resin at a proportion of less than 5 mol%; a

saponified modified polyvinyl ester in which an unsaturated carboxylic acid or a derivative thereof, an unsaturated sulfonic acid or a derivative thereof, a $C_{2-30}$ alpha-olefin, or the like is copolymerized at a proportion of less than 15 mol%; and a polyvinyl acetal polymer in which the hydroxyl groups of a polyvinyl alcohol are partially crosslinked using an aldehyde such as formaldehyde, butyraldehyde, or benzaldehyde.

The degree of saponification of the polyvinyl alcohol resin is preferably at least 99 mol%, more preferably at least 99.5 mol%. A degree of saponification of less than 99 mol% is not preferable, as the polyvinyl alcohol will readily elute, leading to the risks of in-plane irregularities in optical properties, reductions in dye affinity during dyeing steps, breakage during stretching steps, and dramatic reductions in productivity.

In order to improve the optical properties of the present invention, the polyvinyl alcohol resin must have a degree of polymerization of from 5,000 to 10,000, preferably at least 5,500. If the degree of polymerization of the polyvinyl alcohol resin is less than 5,000, there will be difficulties in obtained high polarization performance. If the degree of polymerization exceeds 10,000, the resin will become harder, reducing film formation ability, drawability, and productivity; thus, a degree of polymerization of no more than 10,000 is preferable from an industrial point of view.

The "degree of polymerization of the polyvinyl alcohol resin" refers to the viscosity-average degree of polymerization, and can be calculated according to a method that is well known in the art. For example, the viscosity-average degree of polymerization can be calculated according to the following method. 0.28 g polyvinyl alcohol resin was dissolved in 70 g distilled water at 95°C to prepare a 0.4% aqueous polyvinyl alcohol solution, which was cooled to 30°C. The solution was cooled in a °C constant-temperature water bath to create a polymerization measurement sample. 10 mL of the polymerization measurement sample was dried for 20 hours in an evaporating dish within a dryer at 105°C, and the post-drying weight [$\alpha$ (g)] of the polymerization measurement sample was measured. The concentration C (g/L) of the polymerization measurement sample was calculated according to formula (i).

$$C = 1000 \times \alpha/10 \quad \text{Formula (i)}$$

The polymerization measurement sample or distilled water was introduced into an Ostwald viscometer using a 10 mL hole pipette, and stabilized for 15 minutes in a 30°C constant-temperature water bath. The settling time t1 (sec) of the introduced polymerization measurement sample and the settling time t0 (sec) of the distilled water were measured, and the viscosity-average degree of polymerization E was calculated using formulas (ii) through (iv).

$$\eta t = t_1/t_0 \quad \text{Formula (ii)}$$

$$\eta = 2.303 \times \log(\eta t/c) \quad \text{Formula (iii)}$$

$$\log(E) = 1.613 \times \log([\eta] \times 104/8.29) \quad \text{Formula (iv)}$$

The polyvinyl alcohol resin obtained as described above can be formed into a film to obtain a film feedstock. Non-limiting examples of film formation methods include melt-extruding a hydrous polyvinyl alcohol resin, along with film casting, wet film formation (expulsion into a poor solvent), gel film formation (chill-gelling an aqueous polyvinyl alcohol resin solution, following by extracting and removing the solvent), film casting (pouring an aqueous polyvinyl alcohol resin solution onto a base, followed by drying), and combinations of these methods.

Non-limiting examples of the solvent used in forming the film include one or more of dimethyl sulfoxide, dimethyl formamide, dimethyl acetamide, N-methyl pyrrolidone, ethylene glycol, glycerol, propylene glycol, diethylene glycol, triethylene glycol, tetraethylene glycol, trimethylol propane, ethylenediamine, diethylenetriamine, and water. The amount of solvent used to form the film is preferably from 70 to 95 mass% of the total film formation stock solution, but is not restricted thereto. However, if the amount of solvent is less than 50 mass%, the viscosity of the film formation stock solution will increase, impeding filtration and degassing during preparation, and making it difficult to obtain a film feedstock free of foreign matter or defects. If the amount of solvent is greater than 95 mass%, the viscosity of the film formation stock solution will be too low, inhibiting the desired thickness control, increasing the effects of wind surface ripples during drying and drying time, and reducing productivity.

A plasticizer may optionally be used to manufacture the film feedstock. Non-limiting examples of plasticizers include glycerol, diglycerol, ethylene glycol, propylene glycol, and low-molecular-weight polyethylene glycol. There is no particular restriction upon the amount of plasticizer used; normally, an amount in a range of 5-15 parts by mass per 100 parts by mass polyvinyl alcohol resin is suitable.

Non-limiting examples of methods of drying the film feedstock following film formation include hot-air drying,

contact drying using a heated roller, and infrared heater drying. One of these methods may be used in isolation, or a combination of two or more may be used. Similarly, there is no particular restriction upon the drying temperature, but a temperature in a range of 50-70°C is preferable.

Thermal treatment is preferably performed in order to keep the swelling of the dried film feedstock within a predetermined range to be described hereafter. Examples of the method of thermally treating the film feedstock following film formation include hot air, contact with a heated roller, and the like; there is no particular restriction as long as thermal treatment is possible. One of these methods may be used in isolation, or a combination of two or more may be used. There is no particular restriction upon the thermal treatment temperature and time; a range of 110-140°C is preferable, and treatment is preferably performed for 1-10 minutes, but the invention is not particularly restricted to such conditions.

The thickness of the resulting film feedstock is preferably 20-100 $\mu$m, more preferably 20-80 $\mu$m, and still more preferably 20-60 $\mu$m. If the thickness if less than 20 $\mu$m, the film will be prone to tearing. If the thickness exceeds 100 $\mu$m, the stress upon the film during stretching will increase, the mechanical load during stretching steps will increase, and large-scale machinery will be necessary to withstand the load.

The feedstock film obtained as described above is next subjected to a swelling step.

The swelling step is performed by immersing the polyvinyl alcohol resin film in a 20-50°C solution for from 30 seconds to 10 minutes. The solution is preferably water-based. In order to reduce the time necessary to manufacture the polarizing element, the swelling step can be omitted, as swelling will also occur during pigment dyeing.

The swelling level F of the film feedstock is preferably 200-240%, more preferably 205-235%, and still more preferably 210-230%. If the swelling level F is less than 200%, there will be little elongation during stretching and the possibility of tearing at low elongation rates will increase, impeding sufficient stretching. If the swelling level F exceeds 240%, swelling will be excessive, causing wrinkles and slack and leading to breakage during stretching. To control the swelling level F, the temperature and time of the thermal treatment performed upon the film feedstock following film formation can be adjusted, for example, to yield a suitable swelling level F.

A method well known in the art can be used to measure the swelling level F of the film feedstock, an example of which is as follows. The film feedstock was cut to 5 × 5 cm, and immersed for four hours in 1 L of 30°C distilled water. The immersed film was removed from the distilled water and sandwiched between two sheets of filter paper to absorb any water drops on the surface, after which the weight [$\beta$(g)] of the film having been immersed in the water was measured. After having been immersed and having the water drops on its surface absorbed, the film was dried for 20 hours in a dryer at 105°C and cooled for 30 minutes in a desiccator, after which the weight [$\gamma$(g)] of the dried film was measured, and the swelling level F of the film feedstock was calculated according to formula (v).

$$\text{Swelling level F} = 100 \times \beta/\gamma\ (\%) \quad \text{Formula (v)}$$

After the swelling step, a dyeing step is performed. In the present invention, a pigment represented by formula (1) can be adsorbed to the polyvinyl alcohol-based film in the dyeing step. There is no particular limitation upon the dyeing step as long as the method involves adsorbing the pigment onto the polyvinyl alcohol-based film; for example, the dyeing step can be performed by immersing the polyvinyl alcohol resin film in a solution containing a dichromatic dye. The temperature of the solution used in this step is preferably 5-60°C, more preferably 20-50°C, and especially preferably 35-50°C. The immersion time within the solution can be adjusted as appropriate, with from 30 seconds to 20 minutes being preferable, and 1-10 minutes being more preferable. The dyeing method preferably involves immersion in the solution, but it is also possible to apply the solution to the polyvinyl alcohol resin film.

The dichromatic dye-containing solution can contain sodium carbonate, sodium bicarbonate, sodium chloride, sodium sulfate, anhydrous sodium sulfate, sodium tripolyphosphate, or the like as a dyeing aid. The content in each instance can be adjusted as desired according to the dye affinity according to time and temperature, with an amount of 0-5 wt% being preferable, and 0.1-2 wt% being more preferable.

The pigment used during the dyeing step is the azo compound which is a dichromatic pigment represented by formula (1), and can be used in the form of a free acid, or a salt of the compound. Acceptable salts include alkali metal salts such as a lithium salt, a sodium salt, or a potassium salt, and organic salts such as an ammonium salt or an alkylamine salt. A sodium salt is preferable.

The present invention relates to an azo compound represented by formula (1) in the form of a free acid, and to a salt thereof. In formula (1), $R_1$ to $R_4$ each individually represent a hydrogen atom, a lower alkyl group, or a lower alkoxy group, $R_1$ to $R_4$ preferably being a hydrogen atom or a lower alkyl group, $R_1$ and $R_3$ especially preferably being a hydrogen atom or a methyl group and $R_2$ and $R_4$ especially preferably being a hydrogen atom. *n* represents 1-3. In the context of the present invention, "lower alkyl group" and "lower alkoxy group" refer to $C_{1-5}$ alkyl groups and alkoxy groups. Next, specific examples of azo compounds represented by formula (1) used in the present invention will be given. In the Example Compounds, sulfo groups, carboxyl groups, and hydroxyl groups are shown in the form of free acids.

[Example Compound 1]

[Formula 2]

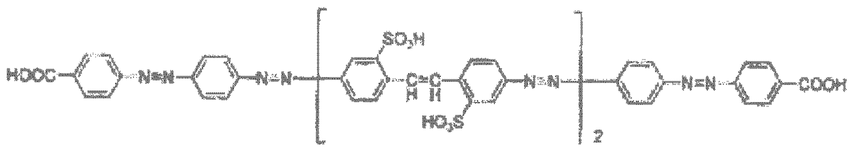

[Example Compound 2]

[Formula 3]

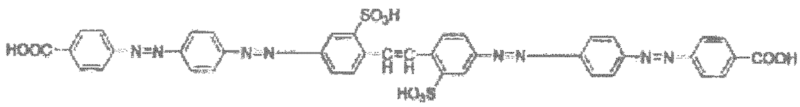

[Example Compound 3]

[Formula 4]

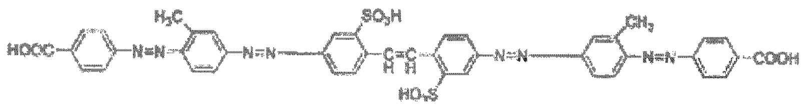

[Example Compound 4]

[Formula 5]

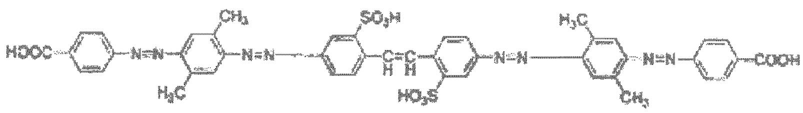

[Example Compound 5]

[Formula 6]

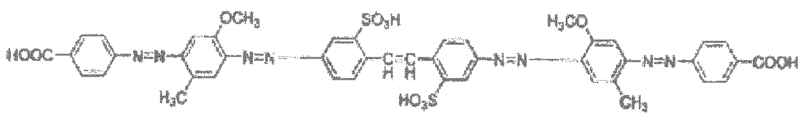

The azo compound used as a pigment in the present invention can typically be produced via a known process of diazotization or coupling according to an azo dye synthesis means known in the art (for example, see p. 626, *Senryo Kagaku,* Yutaka Hosoda (Gihodo)).

A typical production method is to diazotize 4-aminobenzoic acid and perform coupling with an aniline represented by the following formula:

[Formula 7]

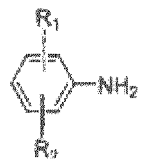

($R_1$ and $R_2$ being as defined for formula (1) above) to obtain a monoazo compound represented by the following formula:

[Formula 8]

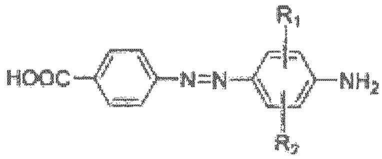

Next, the monoazo-amino compound and 4,4'-dinitrostilbene-2,2'-sulfonic acid are reacted under alkaline conditions, after which glucose reduction can be performed to obtain the azo compound represented by formula (1).

In the reaction described above, the diazotization step may be performed by according to a regular method by mixing a nitrite such as sodium nitrite into a solution of a disazo component in an aqueous mineral acid solution of hydrochloric acid, sulfuric acid, or the like, or a liquid suspension of the component. Alternatively, an inverse method of adding a nitrite to a neutral or weakly alkaline aqueous solution of the disazo component followed by mixing with a mineral acid may be performed. A diazotization temperature of -10 to 40°C is suitable. The step of coupling with the aniline is performed by mixing the diazo solutions described above with an acidic aqueous solution of hydrochloric acid, acetic acid, or the like at a temperature of -10 to 40°C and in acidic conditions of pH 2-7.

The step of condensing under alkaline conditions in the reaction of the monoazo-amino compound and the 4,4'-dinitrostilbene-2,2'-sulfonic acid is performed under strongly alkaline conditions, such as those yielded by sodium hydroxide or lithium hydroxide. An alkali concentration of 2% to 10% and a temperature of 70-100°C are suitable. The number represented by n in formula (1) can be adjusted by altering the respective proportions of the monoazo-amino compound and the 4,4'-dinitrostilbene-2,2'-sulfonic acid. In the glucose reduction step, it is typical to use a glucose concentration in alkaline conditions of 0.5-1.2 equivalent weight.

Examples of substituents for the aniline optionally comprising a substituent ($R_1$ to $R_4$) constituting the primary coupling component used in synthesizing the azo compound represented by formula (1) include a methyl group, an ethyl group, a methoxy group, and an ethoxy group. These substituents may have single or double bonds. The bonding site is a 2- site; a 3- site, a 2- site, and a 5- site; a 3-site and a 5- site; or a 2- site and a 5- site of the amino group; preferably a 3- site, a 2- site, and a 5- site. Examples of other anilines include aniline, 2-methylaniline, 3-methylaniline, 2-ethylaniline, 3-ethylaniline, 2,5-dimethylaniline, 2,5-diethylaniline, 2-methoxyaniline, 3-methoxyaniline, 2-methoxy-5-methylaniline, 2-dimethoxyaniline, 3,5-dimethylaniline, 2,6-dimethylaniline, and 3,5-dimethoxyaniline. These anilines may have a protected amino group. An example of a protecting group is an omega-methanesulfonic acid group.

The azo compounds represented by formula (1) and salts thereof may be used in the dye-based polarizing element or dye-based polarizing plate according to the present invention singly or in combination. One or more additional types of other organic dye may also be used as necessary. There is no particular restriction upon the additional organic dye, but it preferably dyes hydrophilic polymers and is a highly dichromatic dye having absorption properties in a wavelength region different from the absorption wavelength region of the azo compound or salt thereof according to the present invention. Examples include C.I. Direct Red 2, C.I. Direct Red 31, C.I. Direct Red 79, C.I. Direct Red 81, C.I. Direct Red 247, C.I. Direct Green 80, C.I. Direct Green 59, C.I. Direct Blue 202, and C.I. Direct Violet 9. These pigments may be used as free acids, or as alkali metal salts (such as sodium salts, potassium salts, or lithium salts), ammonium salts, or amine salts.

If another organic dye is additionally used as necessary, the dye type will differ according to whether the desired polarizing element is a neutral-colored polarizing element, a colored polarizing element for a liquid crystal projector, or another type of colored polarizing element. There is no particular limitation upon the proportion thereof in the formulation; typically, a total amount of one or more organic dye in a range of 0.1-10 parts by weight with respect to the weight of the azo compound represented by formula (1) or salt thereof is preferable.

After the dyeing step, a cleaning step (hereafter, "cleaning step 1") can be performed before proceeding to the next step. The cleaning step 1 is a step of cleaning off dye solvent adhering to the surface of the polyvinyl alcohol resin

film from the dyeing step. Performing a cleaning step 1 allows migration of the dye into the solution being treated in the next step to be suppressed. Water is typically used in the cleaning step 1. The cleaning method preferably involves immersion in the solution, but it is also possible to apply the solution to the polyvinyl alcohol resin film. There is no particular limitation upon the cleaning time, but 1-300 seconds is preferable, and 1-60 seconds more preferable. The temperature of the solvent used in cleaning step 1 must be a temperature that will not dissolve a hydrophilic polymer. The cleaning treatment is typically performed at 5-40°C.

After the dyeing step or cleaning step 1, a step of adding a crosslinking agent and/or a water resistance agent can be performed. Examples of crosslinking agents include boron compounds such as boric acid, borax, or ammonium borate; polyhydric aldehydes such as glyoxal or glutaraldehyde; a biuret-type, isocyanurate-type, block-type, or other type of polyhydric isocyanate compound; and titanium compounds such as titanium oxysulfate. Also acceptable are ethylene glycol glycidyl ether, polyamide epichlorohydrin, and the like. Examples of water resistance agents include succinic acid peroxide, ammonium persulfate, calcium perchlorate, benzoin ethyl ether, ethylene glycol diglycidyl ether, glycerol diglycidyl ether, ammonium chloride, and magnesium chloride, with boric acid being preferable. A step of adding a crosslinking agent and/or a water resistance agent is performed using one or more of the abovementioned crosslinking agents and/or water resistance agents. Water is preferably used as the solvent, but the present invention is not limited to such. The concentration of the crosslinking agent and/or water resistance agent in the solvent in the step of adding a crosslinking agent and/or a water resistance agent is preferably 0.1-6.0 wt% of the solvent in the case of boric acid, for example, and more preferably 1.0-4.0 wt%. The temperature of the solvent used in this step is preferably 5-70°C, more preferably 5-50°C. The method used to incorporate the crosslinking agent and/or water resistance agent into the polyvinyl alcohol resin film is preferably immersion in the solution, but it is also acceptable to apply or paint the solution onto the polyvinyl alcohol resin film. The treatment time for this process is preferably from 30 seconds to 6 minutes, more preferably 1-5 minutes. However, it is not essential to add a crosslinking agent and/or a water resistance agent, and this step may be omitted if time must be reduced or a cross-linking or water resistance treatment is unnecessary.

After performing the dyeing step, cleaning step 1, and step of adding a crosslinking agent and/or a water resistance agent, a stretching step is performed. The stretching step is a step of uniaxially stretching the polyvinyl alcohol-based film. The stretching method may be a wet stretching method or a dry stretching method, and the present invention can be attained by stretching to a stretch factor of at least 3. The stretch factor is preferably at least 3, more preferably 5-7.

If a dry stretching method is used and the stretching/heating medium is air, stretching is preferably performed at a temperature in a range from room temperature to 180°C. Treatment is preferably performed in an atmosphere having a relative humidity of 20-95% RH. Non-limiting examples of heating methods include inter-roller zone stretching, roller-heated stretching, rolling, and infrared-heated stretching. The stretching step can be performed in one stage, or in two or more multiple stages.

If wet stretching is used, stretching is performed in water, a water soluble organic solvent, or a mixed solvent thereof. Drawing is preferably performed while immersing the film in a solution containing a crosslinking agent and/or water resistance agent. Examples of crosslinking agents include boron compounds such as boric acid, borax, or ammonium borate; polyhydric aldehydes such as glyoxal or glutaraldehyde; a biuret-type, isocyanurate-type, block-type, or other type of polyhydric isocyanate compound; and titanium compounds such as titanium oxysulfate. Also acceptable are ethylene glycol glycidyl ether, polyamide epichlorohydrin, and the like. Examples of water resistance agents include succinic acid peroxide, ammonium persulfate, calcium perchlorate, benzoin ethyl ether, ethylene glycol diglycidyl ether, glycerol diglycidyl ether, ammonium chloride, and magnesium chloride. Drawing is performed in a solution containing one or more of the abovementioned crosslinking agents and/or water resistance agents. The crosslinking agent is preferably boric acid. The crosslinking agent and/or water resistance agent concentration in the stretching step is preferably, for example, 0.5-15 wt%, more preferably 2.0-8.0 wt%. A stretch factor of 2-8 is preferable, and 5-7 more preferable. The stretching temperature is preferably 40-60°C, and more preferably 45-58°C. The stretching time is ordinarily from 30 seconds to 20 minutes, more preferable 2-5 minutes. The wet stretching step can be performed in one stage, or in two or more multiple stages.

After the stretching step has been performed, crosslinking agent and/or water resistance agent or foreign matter adhering to the surface of the film may precipitate; thus, a cleaning step of cleaning the surface of the film (hereafter, "cleaning step 2") can be performed. The cleaning time is preferably from 1 second to 5 minutes. The cleaning method preferably involves immersion in a cleaning solution, but it is also possible to apply or paint the solution onto the polyvinyl alcohol resin film. The cleaning treatment can be performed in one stage, or in two or more multiple stages. There is no particular limitation upon the temperature of the solution used in the cleaning step; ordinarily, the temperature will be 5-50°C, preferably 10-40°C.

Non-limiting examples of the solvent used in the preceding steps include water; dimethyl sulfoxide; N-methylpyrrolidone; alcohols such as methanol, ethanol, propanol, isopropyl alcohol, glycerin, ethylene glycol, propylene glycol, diethylene glycol, triethylene glycol, tetraethylene glycol, or trimethylol propane; and amines such as ethylenediamine or diethylenetriamine. A mixture of one or more of these solvents can also be used. Water is the most preferable solvent.

After the stretching step or cleaning step 2, a film drying step is performed. Drying can be performed via natural

drying, or moisture on the film surface can be removed via roller compression, an air knife, or a water absorbent roller to improve drying efficiency, and/or blow-drying can be performed. The drying temperature is preferably 20-100°C, more preferably 60-100°C. The drying time can be from 30 seconds to 20 minutes, with 5-10 minutes being preferable.

The polyvinyl alcohol resin film polarizing element with improved optical properties and durability according to the present invention can be obtained according to the method described above. The foregoing description features an example in which a polyvinyl alcohol-based resin is used, but a person skilled in the art will be capable of producing a polarizing element by including a dichromatic pigment and orienting a hydrophilic resin via stretching, share orientation, or the like even if the film to which the pigment of the polarizing element is adsorbed is obtained from an amylose-based resin, a starch-based resin, a cellulose-based resin, a polyacrylate-based resin, or the like.

A transparent protective layer is provided on one or both sides of the obtained polarizing element to yield a polarizing plate. The transparent protective layer can be provided in the form of a polymer coating layer or a laminated film layer. The transparent polymer or film forming the transparent protective layer is preferably a transparent polymer or film having high mechanical strength and good thermal stability. Examples of substances used to form the transparent protective layer include cellulose acetate resins such as triacetyl cellulose or diacetyl cellulose, or films thereof; acrylic resins or films thereof; polyvinyl chloride resins or films thereof; nylon resins or films thereof; polyester resins or films thereof; polyarylate resins or films thereof; cyclic polyolefin resins comprising a cyclic olefin such as norbornene as a monomer, or films thereof; polyolefins having a polyethylene, polypropylene, cyclo-, or norbornene frame, or copolymers thereof; and resins having an imide and/or an amide as a main chain or side chain, or polymers or films thereof. A liquid crystalline resin or film thereof can also be provided as the transparent protective layer. The thickness of the protective film is, for example, from 0.5-200 $\mu$m. Identical or different types of resin or film are provided in one or more layers on one or both surfaces to create a polarizing plate.

An adhesive is necessary in order to bond the transparent protective layer to the polarizing element. There is no particular limitation upon the adhesive, but a polyvinyl alcohol-based adhesive is preferable. Non-limiting examples of polyvinyl alcohol-based adhesives include Gohsenol™ NH-26 (Nippon Gohsei) and Exceval™ RS-2117 (Kuraray). A crosslinking agent and/or water resistance agent can be added to the adhesive. A maleic anhydride-isobutylene copolymer is used for the polyvinyl alcohol-based adhesive, but an adhesive into which a crosslinking agent is mixed as necessary can be used. Examples of maleic anhydride-isobutylene copolymers include Isobam #18 (Kuraray), Isobam #04 (Kuraray), ammonia-modified Isobam #104 (Kuraray), ammonia-modified Isobam #110 (Kuraray), imidated Isobam #304 (Kuraray), and imidated Isobam #310 (Kuraray). A water soluble polyhydric epoxy compound can be used as a crosslinking agent at this time. Examples of water soluble polyhydric epoxy compounds include Denacol EX-521 (Nagase ChemteX) and Tetrad-C (Mitsui Gas Chemical). Known adhesives other than polyvinyl alcohol resin adhesives, such as urethane, acrylic, or epoxy adhesives, can also be used. In order to improve the adhesive strength of the adhesive or to improve water resistance, an additive such as a zinc compound, a chloride, or an iodide can simultaneously be added to a concentration of 0.1-10 wt%. There is no particular limitation upon the additive. After the transparent protective layer is bonded using the adhesive, drying or heat treatment is performed at a suitable temperature to obtain a polarizing plate.

In some cases, such as, for instance, when the obtained polarizing plate is bonded to a liquid crystal or organic electroluminescent display device, various functional layers or brightness-improving layers or films can be provided on the surface of the unexposed side of the protective layer or film in order to improve viewing angle and/or contrast. A glue is preferably used to bond the polarizing plate to these films or display devices.

Various known functional layers, such as a reflection- or glare-preventing layer or a hard coating layer, may be present on the other side of the polarizing plate, i.e., on the exposed side of the protective layer or film. A coating method is preferred for forming these various functional layers, but films having the functions can be bonded to the film using an adhesive or glue. The various functional layers can be a layer or film for controlling phase contrast.

By optimizing the physical properties of the polyvinyl alcohol resin having a degree of polymerization of 5,000 to 10,000 according to the present invention and designing an optimal pigment structure according to the method described above, a polarizing element and polarizing plate having improved optical properties and light, heat, and humidity resistance can be obtained. An LCD device using the polarizing element or polarizing plate according to the present invention is highly reliable and exhibits high contrast over extended periods, as well as high color reproducibility.

The polarizing element or polarizing plate according to the present invention so obtained can be used with a liquid crystal projector, calculator, clock, laptop computer, word processor, liquid crystal television, polarizing lens, polarized glasses, car navigation system, or interior or exterior instrument or display device, providing a protective layer, functional layer, or backing as necessary

One possible application for the polarizing plate according to the present invention is to use the plate as a polarizing plate with backing. The backing preferably has a flat surface to which the polarizing plate can be bonded, or a molded glass piece for optical applications. Examples of molded glass pieces include a glass plate, a lens, a prism (such as a triangular prism or cubic prism), and the like. A polarizing plate bonded to a lens can be used as a condenser lens with polarizing plate in a liquid crystal projector. A polarizing plate bonded to a prism can be used as a polarizing

beam splitter with polarizing plate or dichroic prism with polarizing plate for a liquid crystal projector. The plate may also be bonded to a liquid crystal cell. Examples of glass materials include soda glass, borosilicate glass, an inorganic crystal base, an inorganic sapphire base, or another inorganic glass, or organic plastic sheets of acrylic, polycarbonate, or the like, with inorganic glass being preferable. The thickness and size of the glass plate can be as desired. An AR layer is preferably provided on one or both of a glass side and a polarizing plate side of a polarizing plate with glass in order to further improve single plate light transmission. A transparent adhesive (or glue) is applied to the backing on, for example, a flat backing surface section, to which the polarizing plate according to the present invention is bonded. It is also possible to apply a transparent adhesive (or glue) to the polarizing plate, then bond the backing thereto. The adhesive (or glue) used here is preferably, for example, an acrylic ester adhesive. If the polarizing plate is used as an elliptical polarizing plate, the phase contrast plate side is ordinarily bonded to the backing, but the polarizing plate side may also be bonded to a molded glass piece.

Working Examples

The present invention will be explained in greater detail below with the aid of examples and comparative examples, but the present invention is not limited to these examples. The transmission of the examples was rated as follows.

Respective transmission was measured using a spectrophotometer (Hitachi U-4100).

To measure transmission using a spectrophotometer (Hitachi U-4100), an iodine-based polarizing plate (Polatechno SKN-18043P) having a visibility-corrected transmission of 43% and a polarization level of 99.99% as measured according to JIS-Z 8701 (C light source, 2° field of view) was set on the light-emitting side, and absolutely polarized light was directed upon a measurement specimen. The protective layer of the iodine-based polarizing plate was of non-UV-absorbing triacetyl cellulose.

The absolute parallel transmission rates for various wavelengths obtained by directing absolutely polarized light upon the polarizing plate according to the present invention and measuring so that the oscillation direction of the absolutely polarized light and the absorption axis direction of the polarizing plate according to the present invention are orthogonal (i.e., the absorption axis of the absolute polarized photons and the absorption axis of the polarizing plate according to the present invention are parallel) were labeled Ky, and absolute orthogonal transmission rates for various wavelengths obtained by measuring so that the oscillation direction of the absolutely polarized light and the absorption axis direction of the polarizing plate according to the present invention are parallel (i.e., the absorption axis of the absolute polarized photons and the absorption axis of the polarizing plate according to the present invention are orthogonal) were labeled Kz.

The Ky and Kz for various wavelengths were used to calculate the single plate transmission Ts for the different wavelengths according to formula (J), and the polarization level $\rho$ for the different wavelengths according to formula (L).

$$\text{Single plate transmission } Ts = (Ky + Kz) / 2 \quad \text{Formula (J)}$$

$$\text{Polarization level } \rho = (Ky - Kz) / (Ky + Kz)$$

The azo compounds used in the following examples were synthesized according to the following methods.

Synthesizing Example Compound 1: 13.7 parts of 4-aminobenzoic acid was added to 500 parts of water and dissolved using sodium hydroxide. The mixture was cooled to 10°C or less, 32 parts of 35% hydrochloric acid was added followed by 6.9 parts of sodium nitrite, and the mixture was stirred for one hour at 5-10°C. To this was added 20.9 parts of aniline-omega-sodium methanesulfonate, after which sodium carbonate was added to adjust the pH to 3.5 while stirring at 20-30°C. The mixture was further stirred to complete the coupling reaction, and filtered to obtain a monoazo compound. The obtained monoazo compound was stirred at 90°C in the presence of sodium hydroxide to obtain 17 parts of a monoazo-amino compound represented by the following formula.

[Formula 9]

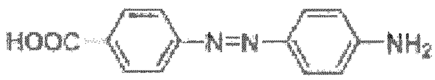

12 parts of the monoazo-amino compound and 21 parts of 4,4'-dinitrostilbene-2,2'-sulfonic acid were dissolved in 300

parts of water, 12 parts of sodium hydroxide was added, and a condensation reaction was performed at 90°C. Next, reduction was performed using 9 parts of glucose, salting out was performed using sodium chloride, and the mixture was filtered to obtain the azo compound represented by Example Compound 1.

Synthesizing Example Compound 2: 12 parts of the abovementioned monoazo-amino compound and 10 parts of 4,4'-dinitrostilbene-2,2'-sulfonic acid were dissolved in 300 parts of water, 24 parts of sodium hydroxide was added, and a condensation reaction was performed at 90°C. Next, reduction was performed using 18 parts of glucose, salting out was performed using sodium chloride, and the mixture was filtered to obtain the azo compound represented by Example Compound 2.

[Example 1] A polyvinyl alcohol resin film (Kuraray VF series) having a degree of saponification of 99% or greater, a film thickness of 40 μm, a degree of polymerization of 5,500, and a swelling level of 232% was immersed for three minutes in 30°C warm water to perform a swelling treatment. The swelled film was immersed in a 35°C aqueous solution containing 0.3 wt% of the pigment of Example Compound 1, 0.1 wt% sodium tripolyphosphate, and 0.1 wt% mirabilite to adsorb the pigment. The film with adsorbed pigment was cleaned in water, after which a 20°C aqueous solution of 2 wt% boric acid was used to perform boric acid treatment for one minute. The film obtained from the boric acid treatment was treated for five minutes in a 58°C aqueous solution containing 3.0 wt% boric acid while being drawn to a factor of 5.0. The film obtained from the boric acid treatment was treated for five seconds using room temperature water while keeping the film in a state of tension. The treated film was immediately dried for five minutes at 60°C to obtain a polarizing element having a single plate transmission of 44% and a thickness of 15 μm. A polarizing element using a polyvinyl alcohol film having a degree of polymerization of 5,500 was manufactured according to the method described above.

The polarizing element was layered with an alkali-treated triacetyl cellulose film (Fuji Photographic Film TD-80U; hereafter, "TAC") having a thickness of 80 μm using a polyvinyl alcohol-based adhesive in a TAC/adhesive layer/polarizing element/adhesive layer/TAC configuration to obtain a laminated polarizing plate for use as a measurement specimen.

A polarizing element was similar manufactured using a polyvinyl alcohol resin film (Kuraray VF-PS) having a thickness of 75 μm and a degree of polymerization of 2,400, and a polarizing element was manufactured using a polyvinyl alcohol-based film having a degree of polymerization of 2,400 was manufactured in order to compare differences in optical properties arising from the degree of polymerization. A polarizing plate using the polarizing element was also manufactured via lamination using TAC film and used as a comparison measurement specimen.

[Example 2]

A sample was prepared in a similar manner, except that Example Compound 2 was used instead the Example Compound 1 used in Example 1, to create a measurement specimen.

[Comparative Example 1]

A sample was prepared in a similar manner, except that the pigment represented in formula (10) was used for the Example Compound 1 used in Example 1, to create a measurement specimen.

[Formula 10]

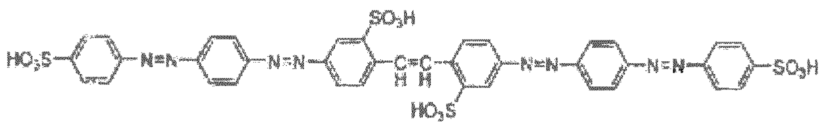

[Comparative Example 2]

A sample was prepared in a similar manner, except that the pigment represented in formula (11) was used for the Example Compound 1 used in Example 1, to create a measurement specimen.

[Formula 11]

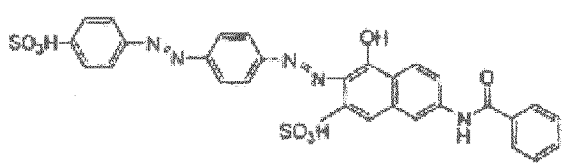

Comparative Example 3

A sample was prepared in a similar manner, except that the pigment represented in formula (12) was used for the Example Compound 1 used in Example 1, to create a measurement specimen.

[Formula 12]

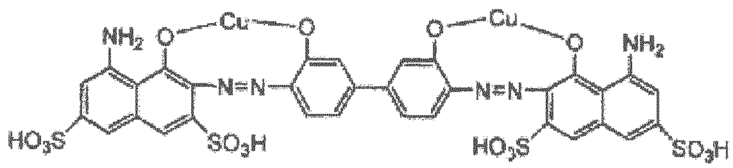

Comparative Example 4

A sample was prepared in a similar manner, except that the pigment represented in formula (13) was used for the Example Compound 1 used in Example 1, to create a measurement specimen.

[Formula 13]

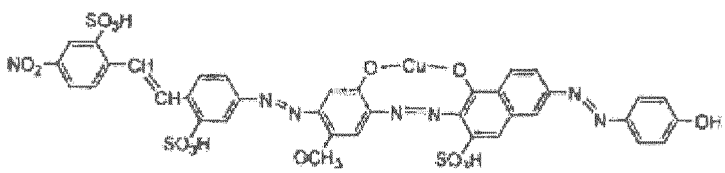

Table 1 shows polarization properties for the samples obtained in Examples 1 or 2 and comparative Examples 1 to 4. Polarization properties refers to the polarization level $\rho$ at a Ts of 44% for a wavelength ("$\lambda$max") representing the maximum polarization properties for each polarizing plate sample. Polarization levels are shown for each of the Examples and comparative examples at polyvinyl alcohol resin polymerization levels of 5,500 and 2,400.

[Table 1]

| | $\lambda$max | Polarization (%) at polymerization of 5,500 | Polarization (%) at polymerization of 2,400 | Improvement in polarization properties (%) |
|---|---|---|---|---|
| Example 1 | 466 | 99.21 | 98.55 | 0.66 |
| Example 2 | 443 | 99.07 | 98.44 | 0.63 |
| Comparative Example 1 | 438 | 98.68 | 98.61 | 0.07 |
| Comparative Example 2 | 522 | 97.63 | 97.59 | 0.04 |
| Comparative Example 3 | 620 | 91.82 | 91.79 | 0.03 |

(continued)

| | λmax | Polarization (%) at polymerization of 5,500 | Polarization (%) at polymerization of 2,400 | Improvement in polarization properties (%) |
|---|---|---|---|---|
| Comparative Example 4 | 666 | 97.65 | 97.81 | -0.16 |

It was confirmed for Examples 1 and 2 and comparative examples 1-4 that the polarizing element and polarizing plate according to the present invention exhibited better properties and improved polarization properties at a degree of polymerization of 5,550 than at a degree of polymerization of 2,400. By contrast, there was little improvement in properties in comparative examples 1-4 at a degree of polymerization of 5,500, and, indeed, properties worsened in comparative example 4.

As can be seen from Examples 1 and 2 and comparative examples 1-4, a polarizing plate of improved optical properties can be obtained using the polarizing element according to the present invention. The resulting polarizing plate allows a polarizing element and polarizing plate of improved light, heat, and humidity resistance to be obtained, and a LCD device and a polarizing lens using this polarizing element and polarizing plate exhibit good polarization properties and durability.

## Claims

1. A polarizing element comprising a film containing a compound represented by formula (1) or a salt thereof and a polyvinyl alcohol-based resin having a degree of polymerization of 5,000 to 10,000, which is obtained using a feedstock film having a swelling level of 200 to 240%

[Formula 1]

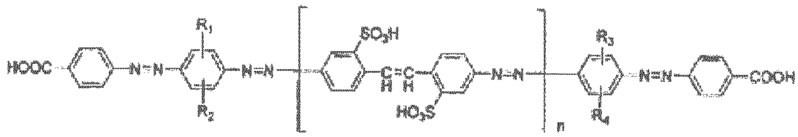

wherein $R_1$ to $R_4$ each individually represent a hydrogen atom, a lower alkyl group, or a lower alkoxyl group; and *n* represents 1-3.

2. The polarizing element according to claim 1, wherein $R_1$ to $R_4$ are hydrogen atoms.

3. A polarizing plate in which a transparent protective layer is provided on at least one side of the polarizing element according to claim 1 or 2.

4. An LCD device comprising the polarizing element according to claim 1 or 2.

5. A liquid crystal projector comprising the polarizing element according to claim 1 or 2.

## Patentansprüche

1. Polarisierendes Element, umfassend einen Film, der eine Verbindung, die durch Formel (1) dargestellt ist, oder ein Salz davon und ein Harz auf Polyvinylalkoholbasis mit einem Polymerisationsgrad von 5.000 bis 10.000 enthält, das unter Verwendung eines Ausgangsfilms mit einem Quellungswert von 200 bis 240 % erhalten wird

[Formel 1]

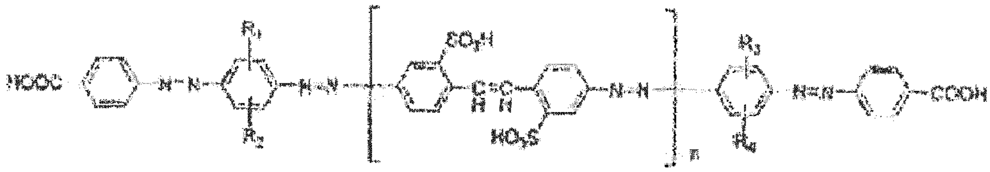

wobei $R_1$ bis $R_4$ jeweils ein Wasserstoffatom, eine Niederalkylgruppe oder eine Niederalkoxylgruppe darstellen; und n 1-3 darstellt.

**2.** Polarisierendes Element nach Anspruch 1, wobei $R_1$ bis $R_4$ Wasserstoffatome sind.

**3.** Polarisierende Platte, in der eine transparente Schutzschicht an mindestens einer Seite des polarisierenden Elements nach Anspruch 1 oder 2 bereitgestellt ist.

**4.** LCD-Vorrichtung, umfassend das polarisierende Element nach Anspruch 1 oder 2.

**5.** Flüssigkristallprojektor, umfassend das polarisierende Element nach Anspruch 1 oder 2.

**Revendications**

**1.** Élément polarisant comprenant un film contenant un composé représenté par la formule (1) ou un sel de celui-ci et une résine à base d'alcool polyvinylique ayant un degré de polymérisation de 5 000 à 10 000, qui est obtenue à l'aide d'un film de matière première ayant un niveau de gonflement de 200 à 240%

[Formule 1]

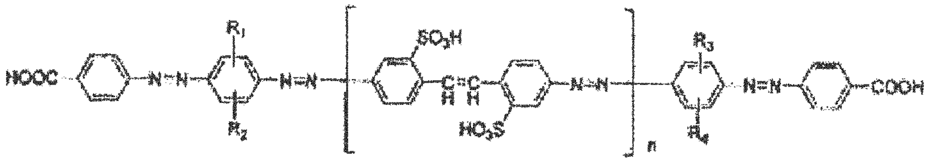

où
$R_1$ à $R_4$ représentent chacun individuellement un atome d'hydrogène, un groupe alkyle inférieur ou un groupe alcoxyle inférieur; et n représente 1 à 3.

**2.** Élément polarisant selon la revendication 1, dans lequel $R_1$ à $R_4$ sont des atomes d'hydrogène.

**3.** Plaque polarisante dans laquelle une couche protectrice transparente est prévue sur au moins un côté de l'élément polarisant selon la revendication 1 ou 2.

**4.** Dispositif LCD comprenant l'élément polarisant selon la revendication 1 ou 2.

**5.** Projecteur à cristaux liquides comprenant l'élément polarisant selon la revendication 1 ou 2.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005171231 A
- JP 2007238888 A
- JP 2008120868 A
- JP 2009014873 A
- JP H01105204 B
- JP H03175404 B
- EP 2022828 A1
- WO 2010071094 A1